(19) Europäisches Patentamt
European Patent Office
Office européen des brevets

(11) Publication number: **0 002 724 A1**

(12) **EUROPEAN PATENT APPLICATION**

(21) Application number: **78101657.1**

(22) Date of filing: **13.12.78**

(51) Int. Cl.²: **C 08 G 18/65**, C 08 G 18/24

(30) Priority: **23.12.77 US 864134**

(43) Date of publication of application: **11.07.79 Bulletin 79/14**

(84) Designated Contracting States: **DE FR GB IT**

(71) Applicant: **Mobay Chemical Corporation, Patent Department Mobay Chemical Corporation Penn Lincoln Parkway West, Pittsburgh Pennsylvania 15 205 (US)**

(72) Inventor: **Taylor, Ronald P., 101 Queensgate Drive, Coraopolis Pennsylvania 15 108 (US)**

(74) Representative: **Müller, Heinz-Gerd, Dipl.-Ing. et al, c/o Bayer AG Zentralbereich Patente Marken und Lizenzen, D-5090 Leverkusen 1, Bayerwerk (DE)**

(54) **Process for the production of elastomeric polyurethane moldings and the product of this process.**

(57) This invention relates to a process for making elastomeric polyurethane reaction injection moldings from

(a) organic polyisocyanates

(b) polyhydroxyl compounds having molecular weights in the range from about 1,800 to about 10,000,

(c) a chain extender,

(d) a catalyst

(e) a blowing agent and,

(f) optionally the auxiliaries and additives commonly used in making polyurethanes,

where the catalyst used is a dialkyl tin dithiocarboxylate and the chain extender comprises at least 75% by weight of ethylene glycol based on the total amount of chain extender.

EP 0 002 724 A1

# PROCESS FOR THE PRODUCTION OF ELASTOMERIC POLYURETHANE MOLDINGS AND THE PRODUCT OF THIS PROCESS

## BACKGROUND OF THE INVENTION

It is generally known that moldings having a compact surface can be produced from polyurethane foams by in-mold foaming, by introducing into a mold, a reactive and foamable mixture based on compounds containing several reactive hydrogen atoms and polyisocyanates. Water and/or fluoro-chlorinated hydrocarbons may be used as blowing agents. Catalysts of the type commonly used in the production of polyurethane foams are also generally used.

Heavy stressed moldings can be produced from linear or slightly branched starting materials which give materials having a range of properties resembling that of elastomers. Moldings of this kind are used, for example, in the automobile industry.

The starting materials are preferably processed by the so-called reaction injection-molding technique (RIM-technique). This is a filling process, in which the highly active, liquid starting components are quickly introduced into the mold through high-output, high-pressure metering units after admixture in positively controlled mixing heads. Moldings weighing 6 to 10 kg are produced in 2 to 4 minutes, depending on wall thickness. Mixtures of substantially linear polyhydroxyl compounds of high molecular weight, a chain extender, and blowing agents are normally reacted with diisocyanates of polyisocyanates to produce moldings of this kind.

Ultimate properties of the molded part are important, e.g. density, tensile strength, elongation, sag and flexural modulus. As important as the physical properties of the final molding is the processability of the formulation in the mold. It is essential to eliminate or minimize entrapment of air bubbles within the mold and reacting mixture, increase resistance to delimination, ensure an even filling of the mold cavity, minimize the cycle time, prevent porosity, and increase the tear resistance or "green strength" at demold. Any system is plaqued by any or all of these problems in varying degrees. One goal is to lengthen the cream time of the mixed components in order to allow the mixture to smoothly and evenly flow into all the crevices of the mold prior to foaming, while at the same time trying to minimize the gel and rise times of the foam so that the demolding of the finished part can be completed as soon as possible. Another goal is to maximize green strength or the integrity of a freshly demolded part. This property is qualitatively measured by immediately bending a corner of the demolded part over itself and observing tearing, crazing, hairline cracking and breaking. While this property may in some cases be enhanced by increasing the mold temperature, energy conservation demands and negative effects on the stiffness of the molded part require a relatively low temperature. Similarly, while this property may in some cases be enhanced by increasing residence time of the part in the mold, economical cycle times require a relatively short demold time.

In conventional formulations, the system is chain extended with a low molecular weight diol, in particular 1,4-butane diol or ethylene glycol. It has recently been found that a particularly good extender comprises a mixture ethylene glycol and another low molecular weight polyol. In addition, conventional catalysts for RIM systems include the typical amine-tin combination which are used in many polyurethane applications e.g. a mixture of triethylene diamine (DABCO) and dibutyl tin dilaurate. Many other tin catalysts including delayed action catalysts are known and are available including those which are the subject of the present invention.

## DESCRIPTION OF THE INVENTION

It has now been unexpectedly found that a particular set of tin catalysts, when used in making RIM elastomeric moldings from ethylene glycol chain extended formulations, gives significant improvements in processability of the reaction mixture and enables the making of molded parts with improved green strength. The particular catalyst in an ethylene glycol extended system is apparently the only catalyst among those known tin and delayed action tin catalysts which gives the combination of very good green strength and at the same time sufficiently long cream times to enable the filling of the mold before foaming begins and at the same time minimizes the gel and rise times for a short cycle or demold time.

Accordingly, the present invention relates to a process for the production of elastomeric polyurethane moldings by the RIM process from a foamable reaction mixture comprising:

(a) organic polyisocyanates,
(b) polyhydroxyl compounds having molecular weights in the range from about 1800 to about 10,000,
(c) a chain extender,
(d) a catalyst
(e) a blowing agent and,
(f) optionally the auxiliaries and additives commonly used in polyurethane chemistry,

where the chain extender (c) comprises at least 75 % by weight based on the total amount of chain extender of ethylene glycol and where the catalyst (d) used comprises a dialkyl tin dithiocarboxylate, preferably

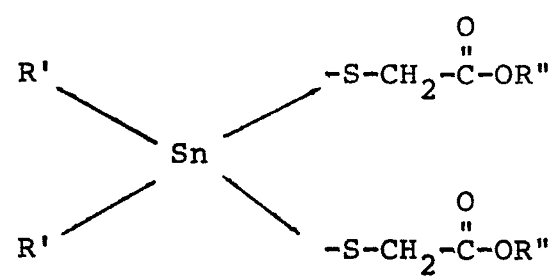

where R' is a $C_4$-$C_{18}$-preferably $C_8$ to $C_{10}$ - and most preferably a $C_8$ (octyl) group and R" represents a $C_1$-$C_{18}$ alkyl group. It is preferred that a tertiary amine be used in conjuction with the dioctyl tin dithiocarboxylate as catalyst. It is also preferred that a mixture of ethylene glycol with at least one other low molecular weight polyol (< 1800 MW) be used as the chain extender.

This particular RIM formulation gives rise to long a cream time which allows for improved flow of the reacting system into the mold, but relatively short time which allows for quick demold. The formulation also gives rise to parts with improved green strength. Moreover, this improvement is not accompanied by any adverse effects on physical properties. Furthermore, these improvements are quite unexpected on the basis of the reaction rate profile for the system and the catalyst structure. Also, the improvements are not seen in catalysts which are structurally similar e.g. dimethyl tin dithiocarboxylates or dioctyl tin di mercaptides or in non-ethylene glycol extended systems such as those using 1,4-butane diol.

Starting components (a) suitable for use in the invention include aliphatic, cycloaliphatic, araliphatic aromatic and heterocyclic polyisocyanates of the type described, for example, by W. Siefken in Justus Liebigs Annalen der Chemie, 562, pages 75 to 136. These include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3- and 1,4-diisocyanate as well as mixtures of these isomers; 1-isocyanato- 3,3,5-trimethyl-5-isocyanatomethyl cyclohexane (U.S. Patent 3,401,190); 2,4- and 2,6-hexahydrotolylene diisocyanate and mixtures of these isomers; hexahydro-1,3- and/or 1,4-phenylene diisocyanate; perhydro-2,4' and/or -4,4'- diphenylmethane diisocyanate; 1,3- and 1,4-phenylene diisocyanate; 2,4- and 2,6-tolylene diisocyanate and any mixtures of these isomers; diphenyl methane-2,4' and/or -4,4'-diisocyanate; napthylene- 1,5-diisocyanate; triphenyl methane-4,4',4"-triisocyanate; polyphenol polymethylene polyisocyanates of the type obtained by condensing aniline with formaldehyde followed by phosgenation, and which are described in British Patents 874,430 and 848,671; *m*- and *p*-isocyanatophenyl sulphonyl

isocyanates as described by U.S. Patent 3,454,606; perchlorinated aryl polyisocyanates of the type described in U.S. Patent 3,277,138, polyisocyanates containing carbodiimide groups of the type described in US Patent 3,152,162; diisocyanates of the type described in U.S. Patent 3,492,330; polyisocyanates containing allophanate groups of the type described in British Patent 994,890; Belgian Patent 761,626 and published Dutch Patent Application 7,102,524; polyisocyanates containing isocyanurate groups of the type described in U.S. Patent 3,001,973, German Patents 1,022,789; 1,222,067 and 1,027,394 and German Offenlegungsschrift 1,929,034 and 3,004,048; polyisocyanates containing urethane groups of the type described in Belgian Patent 752,261 or U.S. Patent 3,394,164; polyisocyanates containing acylated urea groups according to German Patent 1,230,778; polyisocyanates containing biuret groups of the type described in U.S. Patent 3,124,605 and 3,201,371; polyisocyanates obtained by telomerization reactions of the type described in U.S.Patent 3,654,106; polyisocyanates containing ester groups of the type described in British Patents 965,474 and 1,027,956, U.S. Patent 3,567,763 and German Patent 1,231,688; reaction products of the above-mentioned isocyanates with acetals according to German Patent 1,072,385; polyisocyanates containing polymeric fatty acid radicals according to U.S. Patent 3,455,883.

Preferred starting components (a) are diphenyl methane diisocyanate containing carbodiimide and/or uretone imine groups, as described in U.S. Patent 3,152,162 or polyisocyanates containing urethane groups, of the type obtained by reacting 1 mol of 4,4'-diisocyanato diphenyl methane with 0.05 to 0.3 mol of low molecular weight diols or triols, preferably polypropylene glycols having a molecular weight below 700. Mixtures of these preferred polyisocyanates are particularly preferred.

Polyhydroxy polyalkylene polyethers having molecular weights in the range from about 1800 to about 10,000 and preferably in the range from 2000 to 5000, are preferably used as component (b) in the process of the invention. Polyethers containing at least 2 and preferably 2 to 3 hydroxyl groups are suitable for use in the invention, are known, and are obtained, for example, by the polymerization of epoxides, such as ethylene oxide, propylene oxide, butylene oxide, tetrahydrofuran, styrene oxide or epichlorohydrin alone, for example in the presence of $BF_3$, or by the chemical addition of these epoxides, optionally in admixture with or in succession to starter components having reactive hydrogen atoms. Such starter compounds having reactive hydrogen atoms. Such starter compounds include water, alcohols, or amines, such as ethylene glycol, 1,3- or 1,2-propylene glycol, trimethylol propane, 4,4'-dihydroxy diphenyl propane, aniline, ammonia, ethanolamine, glycerine, ethylene diamine and tolylene diamine. in many cases, it is preferred to use polyethers of the kind which contain predominant amounts of primary OH-groups (up to 90% by weight, based on all the OH-groups present in the polyether). Polyethers modified by vinyl polymers of the type obtained by the polymerization of styrene and/or acrylonitrile in the presence of

polyethers (U.S. Patents 3,383,351; 3,304,273; 3,523,093; 3,110,695, German Patent 1,152,536) are also suitable, as are polybutadienes containing OH-groups.

Polyesters, polythioethers, polyacetals, polycarbonates and polyester amides containing hydroxyl groups of the type commonly used for the production of homogeneous and cellular polyurethanes, may also be used in appropriate proportions. Examples of suitable polyesters containing hydroxyl groups are reaction products of polyhydric (preferably dihydric and, optionally, trihydric) alcohols with polybasic (preferably dibasic) carboxylic acids. Instead of free polycarboxylic acids, the corresponding polycarboxylic acid anhydrides or corresponding polycarboxylic acid esters of lower alcohols or mixtures thereof may also be used for the production of the polyesters. The polycarboxylic acids may be aliphatic, cycloaliphatic, aromatic and/or heterocyclic, and may optionally be substituted, for example, by halogen atoms, and/or may be unsaturated. These polycarboxylic acids include succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, glutaric acid anhydride, maleic acid, maleic acid anhydride, fumaric acid, dimeric and trimeric fatty acids such as oleic acid, optionally in admixture with monomeric fatty acids, terephthalic acid dimethyl ester and terephthalic acid-bis-glycol ester.

Suitable polyhydric alcohols include ethylene glycol, 1,2- and 1,3-propylene glycol, 1,4- and 2,3-butylene glycol, 1,6-hexane diol, 1,8-octane diol, neopentyl glycol, cyclohexane dimethanol (1,4-bis-hydroxymethyl-cyclohexane), 2-methyl-1,3-propane diol, glycerol, trimethylol propane, 1,2,6-hexane triol, 1,2,4-butane triol, trimethylol ethane, pentaerythritol, quinitol, mannitol and sorbitol, methyl glycoside, diethylene glycol, triethylene glycol, tetraethylene glycol, polyethylene glycols, dipropylene glycol, polypropylene glycol, dibutylene glycol and polybutylene glycols. These polyesters may contain terminal carboxyl groups. Polyesters of lactones like ε-caprolactone or hydroxy carboxylic acids, like ε-hydroxy caproic acid, may also be used.

Particular examples of polythioethers are the condensation products of thiodiglycol with itself and/or with other glycols, dicarboxylic acids, formaldehyde, amino carboxylic acids or amino alcohols. Depending upon the co-components, these products are polythio mixed ethers, polythioether esters or polythioether esters amides.

Suitable polyacetals include those compounds which can be obtained from glycols, such as diethylene glycol, triethylene glycol, 4,4'-dioxethoxy diphenyl dimethyl methane, hexane diol and formaldehyde. Other suitable polyacetals may be obtained by polymerizing cyclic acetals.

Suitable polycarbonates containing hydroxyl groups are those known per se. They are obtained for example, by reacting diols such as 1,4-propane diol, 1,4-butane diol and/or 1,6-hexane diol, diethylene glycol, triethylene glycol, tetraethylene glycol; with diaryl carbonates such as diphenyl carbonate or phosgene.

Examples of the polyesters amides and polyamides are the predominantly linear condensates obtained from polyhydric saturated and unsaturated amino alcohols, diamines polyamines, and mixtures thereof.

Examples of these compounds are known and are described in High Polymer, Vol. XVI, "Polyurethanes, Chemistry and Technology", by Saunders-Frisch, Interscience Publishers, New York-London, Vol. I (1962), pages 32-42 and pages 44-54, and Vol. II (1964), pages 5-6 and pages 198-199 and in Kunststoff-Handbuch Vol. VII, Vieweg-Hochtlen, Carl-Hanser-Verlag, Munich (1966) on pages 45-71.

The conventional polyhydroxy polyethers of polyurethane chemistry having molecular weights in the range from about 1800 to about 10,000, preferably from 2000 to 5000 and which contain at least 2 and preferably 2 to 3 hydroxyl groups, are preferably used as component (b). Mixtures of the polyethers may also be used.

The chain extender mixture (c) comprises at least (i) 75 % of ethylene glycol, preferably in admixture with (ii) at least one other polyol having a molecular weight below avout 1800, the additional low molecular weight polyol preferably being used in quantities of from about 5 to about 25 % by weight, based on the mixture. The mixture should have an average molecular weight below 600. It is also possible to use known polyamines as chain extenders in addition to the ethylene glycol.

The chain extender mixture (c) is preferably used in quantities of from 10 to 30% by weight, more especially in quantities of from 15 to 25 % by weight, based on component (b), e.g. the higher molecular weight polyol.

Suitable compounds which represent the additional low molecular weight polyol either individually or in admixture include any difunctional or polyfunctional hydroxyl compounds having a molecular weight below about 1800 such as, 1,2- and 1,3-propylene glycol; 1,4- and 2,3-butylene glycol; 1,6-hexane diol; 1,8-octane diol; neopentyl glycol cyclohexane dimethanol (1,4-bis-hydroxymethyl cyclohexane); 2-methyl-1,3-propane diol; glycerol; trimethylol propane; 1,2,6-hexane triol; 1,2,4-butane triol; trimethylol ethane; pentaerythritol; quinitol; mannitol and sorbitol; methyl glycoside; diethylene glycols; dipropylene glycol; polypropylene glycols; dibutylene glycol and polybutylene glycols. It is of course also possible to use polyols containing further hetero atoms such as nitrogen or sulphur, or double bonds. These include, N-methyl diethanol amine; N-ethyl diethanolamine; di-ß-hydroxyl ethyl aniline; N-cyclohexyl diethanolamine; triethanolamine, di-ß-hydroxy ethyl sulphide; 2-butene-1,4-diol; di-ß-hydroxy ethyl urea; and di-ß-hydroxy ethyl urethane.

Examples of polyamines which can be useful as chain extenders include methylene-bis(o-chloroaniline), 4,4'diamino diphenylmethane, ethylene diamine, 1,3 diamino propane, 1-mercapto, 3-aminopropane, hydrazine, and N,N'-dimethyl hydrazine etc..

Polyalkylene glycol ethers obtained by the addition of alkylene oxides, such as ethylene oxide, propylene oxide, butylene oxide, tetrahydrofuran, with such compounds as polyfunctional alcohols, amino alcohols or amines, are also suitable.

Diols and triols which have a hydroxy equivalent weight of from about 30 to about 600, preferably from 30 to 250, and which contain primary hydroxyl groups, have proved to be particularly suitable. Trimethylol propane is preferably used as component (ii). It is also preferred to use triethanol-amine and 1,6-hexane diol.

Water and/or readily volatile organic substances are used as blowing agent (d) in the invention. Suitable organic blowing agents include halogen-substituted alkanes, such as methylene chloride, chloroform, ethylidene chloride, vinylidene chloride, monofluoro-trichloromethane, difluorochloromethane and difluorodichloromethane, and butane, hexane, heptane, or diethyl ether. A blowing effect may also be obtained by adding compounds which decompose spontaneously at temperatures above room temperature, giving off gases such as nitrogen. Examples of such compounds are azo compounds, such as azoisobutyronitrile. Further examples of blowing agents and details on the use of blowing agents may be found in Kunststoff-Handbuch, Vol. VII, published by Vieweg and Hochtlen, Carl-Hanser-Verlag, Munich (1966) on pages 108 and 109, 453-455 and 507-510.

The catalysts used in the process of the present invention are known and are commercially available e.g. from Argus Chemical Corporation (Witco) under the label Markure UL-29 or Fomrez UL-29.

The essential tin dithiocarboxylate catalysts of the invention are generally used in amounts of from about 0.005 to about 0.5 preferably of about 0.01 to 0.2 % by weight based on the quantity of component (b).

As previously mentioned it is preferred to use as conventional tertiary amine catalyst (such as one of those described below) in addition to the dioctyl tin catalyst used in the process of the invention. The amine to tin ratio can vary anywhere from 100:1 to 1:1 (weight ratios) preferably 50:1 to 2:1.

Other catalysts may also be used in the invention include those known per se, for example tertiary amines such as triethylamine, tributylamine, N-methylmorpholine, N-ethylmorpholine, N,N,N'-tetramethyl-ethylene diamine, 1,4-di-azabicyclo-(2,2,2)-octane, N-methyl-N'-dimethylaminoethyl piperazine, N,N-dimethylbenzylamine, bis-(N,N-diethylaminoethyl)-adipate, N,N-diethylbenzylamine, pentamethyldiethylene triamine, N,N-dimethylcyclohexylamine, N,N,N'-tetramethyl-1,2-butane diamine, N,N-dimethyl-ß-phenyl-ethylamine, 1,2-dimethylimidazole and 2-methylimidazole.

Examples of tertiary amines containing hydrogen atoms capable of reacting with isocyanate groups are triethanolamine, triisopropanolamine, N-methyldiethanolamine, N-ethyl-diethanolamine, N,N-dimethylethanolamine and their reaction products with alkylene oxides, such as propylene oxide and/or ethylene oxide.

Other suitable catalysts are silaamines having carbon silicon bonds of the kind described in German Patent 1,229,290. These include 2,2,4-trimethyl-2-silamorpholine and 1,3-diethylaminomethyl tetramethyl disiloxane.

Nitrogen-containing bases such as tetraalkyl ammonium hydroxides; alkali hydroxides such as sodium methylate, and hexahydrotriazines may also be used as catalysts.

Organometallic compounds especially organotin compounds may also be used as catalysts. Preferred organotin compounds include tin-(II)-salt of carboxylic acids, such as tin-(II)-acetate, tin-(II)-octoate, tin-(II)-ethylhexoate and tin-(II)-laurate and the dialkyl tin salts of carboxylic acids such as dibutyl tin diacetate, dibutyl tin dilaurate, dibutyl tin maleate or dioctyl tin diacetate.

Further examples of suitable catalysts and details on the way in which the catalysts work can be found in Kunststoff-Handbuch Vol. VII, published by Vieweg and Hochtlen, Carl-Hanser-Verlag, Munich 1966 pages 96-102.

The total amount of catalyst is generally used in quantities of from about 0.001 to 10% by weight, based on the quantity of compounds (b).

Surface-active additives (emulsifiers and foam stabilizers) can also be used. Examples of emulsifiers are the sodium salts of castor oil sulphonates or even of fatty acids or salts of fatty acids with amines such as diethylamine oleate or diethanolamine stearate. Alkali or ammonium salts of sulphonic acids, such as those of dodecylbenzene sulphonic acid or dinaphthylmethane disulphonic acid or even of fatty acids, such as

ricinoleic acid, or of polymeric fatty acids, can also be used as surface-active additives.

Suitable foam stabilizers include water-soluble polyether siloxanes. These compounds are generally of such structure that a copolymer of ethylene oxide and propylene oxide is attached to a polydimethylsiloxane radical. Foam stabilizers of this kind are described, for example, in U.S. Patent 2,764,565.

It is also possible to use reaction retarders, for example, substances with an acid reaction such as hydrochloric acid or organic acid halides. Cell regulators known _per se_ such as paraffins or fatty alcohols or dimethyl polysiloxanes may also be used. Pigments or dyes and flameproofing agents known _per se_, such as tris-chloroethyl phosphate or ammonium phosphate and polyphosphate may be used. Stabilizers against the effects of ageing and weather, plasticizers and substances with fungistatic and bacteriostatic effects, fillers such as barium sulphate, kieselfuhr, carbon black or prepared chalk may also be used.

Further examples of the surface-active additives and foam stabilizers and of cell regulators, reaction retarders, stabilizers, flameproofing agents, plasticizers, dyes, fillers, substances with fungistatic and bacteriostatic effects and also details on the way in which these additives are used and how they work, can be found in Kunststoff-Handbuch, Vol. VII, published by Vieweg and Hochtlen, Carl-Hanser-Verlag, Munich (1966), pages 103-113.

The polyisocyanate (component a) is preferably used in such a quantity that the foamable mixture has an isocyanate value of from about 90 to about 120, more especially from about 95 to about 110. The isocyanate value is the quotient of the number of isocyanate groups and the number of isocyanate reactive groups

multiplied by 100.

The process of the invention is preferably carried out by the known reaction injection-molding technique (RIM technique). The foamable mixture is preferably introduced into the mold in such a quantity that the molding has a density of from 0.8 to 1.1 g/cc.

Conventional external and/or internal mold-release agents of the type described, for example, in German Offenlegungsschriften 1,953,637 and 2,121,670, may also be used.

The moldings obtainable by the process of the invention are particularly suitable for the production of flexible automobile fenders and bodywork components.

EXAMPLES

The starting materials mentioned in the following examples are processed by means of so-called high pressure dosing units: the components are delivered by special pumps (e.g. Bosch-piston pumps, yielding high pressure of about 100-300 atmospheres) to the mix head (spring loaded nozzle mix head or hydraulically forced mix head), where they are thoroughly mixed by countercurrent injection (HK-machines from Hennecke or equivalent types of machines from other manufacturers such as KRAUSS-MAFFEI, SIEMAG, CANNON).

For the mechanical tests, plates measuring 120x20x0.4 cm are made up in a temperable metal plate mold made of aluminum (Constructal 20/52) or nickel-plated steel to ensure good surface qualities of the moldings. The mold is filled from the longitudinal side through a bar gate. A wax type release agent, giving rather dry and mat surfaces of the moldings was used for the mold release (e.g. RIM-7 from Chemtrend Corp.). Generally, however, other release agents based on waxes, silicones or metallic stearates may also be used for the purposes of the invention. The invention is by no means confined to the above-mentioned machines, and may be carried out equally effectively with stirrer-equipped machines or friction-mixing machines.

Legend of Compounds Used:

Polyol A is a propylene glycol-based polypropylene glycol capped with ethylene oxide to a molecular weight of about 4000 and an OH number of 28.

Polyol B is a trimethylol propane-based polypropylene glycol capped with ethylene oxide to a molecular weight of about 4800 and an OH number of 35.

Polyol C is a toluene diamine-based polypropylene glycol capped with ethylene oxide to a molecular weight of about 600 and an OH number of 365.

Polyol D is a trimethylol propane-based polypropylene glycol capped with ethylene oxide to a molecular weight of about 6000 and an OH number of 28.

UL-29 is a Witco delayed action catalyst - a dioctyl tin dithiocarboxylate

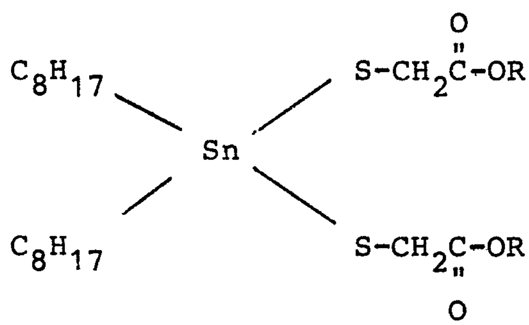

where R is $C_1$-$C_{18}$ alkyl.

UL-32 is a Witco delayed action catalyst - a dioctyl tin dimercaptide.

Polyisocyanate I is a liquid, modified polyisocyanate containing mostly free MDI with an NCO content of 28.1%.

Polyisocyanate II is a liquid, modified polyisocyanate with an NCO content of 22.6 %.

EXAMPLE 1

The following formulation was used in the method described above:

| Resin Blend | PBW |
|---|---|
| Polyol A | 53.0 |
| Polyol B | 6.0 |
| Polyol C | 15.2 |
| ethylene glycol | 18.5 |
| 1,4 butane diol | 3.0 |
| R-11 Freon blowing agent | 4.0 |
| triethylene diamine (DABCO) | 0.4 |
| UL-29 | 0.07 |
| Polyisocyanate I | 121.0 |

An excellent cream time of 8 seconds and rise time of 12 seconds resulted. This gave sufficient time for the mold to be properly filled before foaming and yet allowed for extremely fast demold time. The green strength of the molded part was very good.

The physical properties of the part included:

| | |
|---|---|
| Density, pcf | 63.7 (1.02 g/$cm^3$) |
| Tensile Strength, psi | 4000 (26 MPa) |
| Elongation, % | 60 |
| Set, % | 25 |
| Room Temperature Flexural Modulus psi | 138000 (950 MPa) |
| Sag, in. | .28 (7.12 mm) |

EXAMPLE 2

The following formulation was used:

| Resin Blend | PBW |
|---|---|
| Polyol A | 69.0 |
| Polyol B | 10.0 |
| ethylene glycol | 15.4 |
| trimethylol propane | 1.6 |
| R-11 Freon Blowing Agent | 2.5 |
| $H_2O$ (adj.) | .075 |
| DABCO | 0.3 |
| UL-29 | 0.06 |
| L-5303, A Union Carbide Silicone Surfactant | 0.4 |
| Polyisocyanate I | 92.0 |

Reactivity of a hand mix was measured as follows: a 100 g sample of the polyol blend in a 1 pint cardboard container was stirred vigorously with an air-driven mechanical stirrer. The isocyanate (92 g) was then added quickly, and stirring was continued for an additional 7 seconds. The container was set down and observed for signs of reactivity. A cream time of 20.1 seconds and a rise time of 26.7 seconds were observed. When this mixture was tried on a machine, the long cream time allowed smooth filling of the mold with no entrapment of air. Further, the short rise time allowed the molded part to be demolded in less than the normal time, because of the material's fast cure. Green strength of a freshly demolded part was excellent.

Physical properties of machine molded part:

| | |
|---|---|
| Density, pcf | 63.6 (1.02 g/cm$^3$) |
| Tensile strength, psi | 3300 (23 MPa) |
| Elongation, % | 180 |
| Set, % | 50 |
| Room Temperature Flexural Modulus, psi | 33100 (228MPa) |
| Sag, inches | 0.46. (12 mm) |

EXAMPLE 3 (comparison)

The identical formulation used in Example 2 but with .15 parts DABCO and 0.037 parts UL-32 was used with the basic method outlined in Example 1. This process yielded a moled part with significantly less green strength than those parts made with DABCO and UL-29. This discrepancy is entirely unpredictable. The DABCO/UL-32 combination gives a comparable reaction profile and parts with similar properties yet inferior green strengths.

EXAMPLE 4 (comparison)

UL-29 was used in a non-ethylene glycol extended system and found to be no more advantageous than conventional dibutyl tin dilaurate as catalyst. The following formulations were used:

| Resin Blend | PBW | | |
|---|---|---|---|
| | 1 | 2 | 3 |
| Polyol D | 79.0 | 79.0 | 79.0 |
| ethylene glycol | 1.0 | 1.0 | 1.0 |
| 1,4 butane diol | 18.0 | 18.0 | 18.0 |
| $H_2O$ | .075 | .075 | .075 |
| DABCO | 0.5 | 0.6 | 0.75 |

| | | | |
|---|---|---|---|
| UL-29 | - | .06 | .06 |
| dibutyl tin dilaurate | .03 | - | - |
| Polyisocyanate II | 92.0 | 91.0 | 91.0 |
| Cream time | 12 sec. | 15 sec. | 12 sec. |
| Rise time | 19 sec. | 22 sec. | 18 sec. |

As can be seen from the cream and rise time, there is no appreciable difference between the reaction profiles of formulations with dibutyl tin dilaurate versus UL-29. There is also no appreciable difference in green strengths.

WHAT IS CLAIMED IS:

1. In a process for the production of elastomeric polyurethane reaction injection moldings from

(a) organic polyisocyanates

(b) polyhydroxyl compounds having molecular weights in the range from about 1800 to about 10,000

(c) a chain extender

(d) a catalyst

(e) a blowing agent and

(f) optionally other auxiliaries and additives commonly used in making polyurethanes,

the improvement which comprises using a catalyst (d) a dialkyl tin dithiocarboxylate and wherein the chain extender (c) comprises at least 75 % ethylene glycol by weight based on the total amount of chain extender.

2. The process of Claim 1 wherein the catalyst also comprises a tertiary amine.

3. The process of Claim 2 wherein the chain extender comprises ethylene glycol and at least one other low molecular weight polyol.

4. The process of Claim 3 wherein the dialkyl tin dithiocarboxylate is represented by the formula

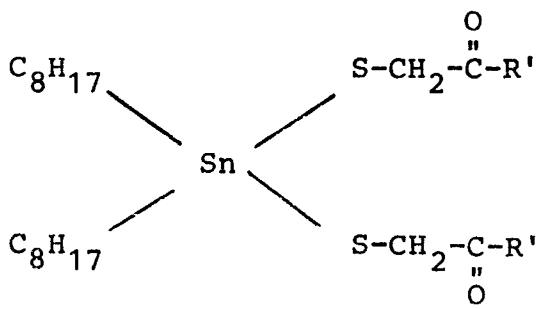

wherein R'represents a $C_1$-$C_{18}$ alkyl group.

5. Product of the process of Claim 1.

European Patent Office

# EUROPEAN SEARCH REPORT

0002724

Application number

EP 78 10 1657

| Category | Citation of document with indication, where appropriate, of relevant passages | Relevant to claim | CLASSIFICATION OF THE APPLICATION (Int. Cl.²) |
|---|---|---|---|
| | FR - A - 2 335 543 (M & T CHEM.)<br>* Page 12, claims 1 and 4; page 13, claim 9, page 10, table *<br>-- | 1-5 | C 08 G 18/65<br>18/24 |
| | FR - A - 2 347 390 (M & T CHEM.)<br>* Page 13, claim 1; page 10, page 11, table *<br>-- | 1-5 | |
| | FR - A - 2 305 454 (BAYER)<br>* Page 17, claims 1-3; page 2, lines3-29; page 7, lines 9-14; page 10, line 36 - page 11, line 3 *<br>---- | 1-5 | TECHNICAL FIELDS SEARCHED (Int.Cl.²)<br>C 08 G 18/24<br>18/22<br>18/16<br>18/65<br>18/66 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-03-1979 | VAN PUYMBROECK |

EPO Form 1503.1 06.78